# EUROPEAN PATENT APPLICATION

(11) **EP 1 578 081 A1**
(43) Date of publication of application: **21.09.2005**
(21) Application number: 05102005.5
(22) Date of filing: 15.03.2005
(51) Int. Cl.: H04L 29/06, G06F 13/10, G06F 3/12, G06F 17/28

(54) **Language neutral message communication channel for displaying user interface elements related to the status of print jobs**

(30) Priority: 19.03.2004 US 804619
(71) Applicant: MICROSOFT CORPORATION, Redmond, Washington 98052-6399 (US)
(72) Inventor: Feng, Jin, 98052, Redmond (US); Shipley, Kenton A., 98052, Redmond (US); Ivanov, Lazar I., 98052, Redmond (US); Bartholomew, Paul D., 98052, Redmond (US)
(74) Representative: Grünecker, Kinkeldey, Stockmair & Schwanhäusser Anwaltssozietät

(57) **Abstract**

A system is for use in printing data on a printer (13,13a). A client (11,110) interfaces with an applications program (112) that has a print capability. A print server (12) in communication with the client (11,110) controls a printing of data communicated to the print server (12) by the client (11,110). A user interface manager (130) communicates with the print server (12) by an asynchronous bi-directional communications channel (132) between the print server (12) and the client (11,110). The user interface manager (130) responds to a user interface message sent from the print server (12) to display information to a user in a flexible custom manner. One exemplary system includes a user display. The message sent to the client user interface manager (130) by the server (12) is a language neutral message that is interpreted by the user interface manager (130) and converted to another representation for presentation to the user on the user display. When used in a printing environment, i.e. where a client print spooler (114) and a server print server (12) do the printing, the language neutral message is converted at the client (11,110) by the user interface manager (130) into a message or display suitable for a user.

## Description

### Field of the invention

The present invention concerns a scheme for displaying user interface elements for use with client/server communications that uses an asynchronous communications channel.

### Background Art

It is customary in large business organizations is to communicate information between computers by means of a network. In addition to computers, copiers, fax machines, printers, scanners and other peripherals are either connected directly to the network or are coupled to a workstation or server that communicates over the network.

It is customary for a single print server to service more users and control the printing of documents for those users by means of data transmissions to more printers either directly connected to the print server or by means of the network. Whether by means of a print server, or by means of a stand alone computer/printer combination, the prior art task of controlling printer operation is performed by a print driver that is an executable piece of software that takes the data from a print spooler and converts it to a format that the printer recognizes.

The prior art is limited in the way user messages regarding the status and/or functioning of the devices coupled to the network are presented to a user. For example, it is often the case that the user of a workstation is conversant in one language i.e. Japanese, while the server runs an English version of an operating system A print job status message originating from a print server will be conveyed in English and may not be useful to the workstation user.

### Summary of the invention

An exemplary system includes a client that interfaces with an applications program that runs on the client. A server in communication with the client performs a function at the request of the client. A user interface manager which also runs on the client sets up an asynchronous communications channel with the server. In one exemplary embodiment this is a bidirectional asynchronous communications channel. The user interface manager responds to a user interface message sent from the server to display information to a user in a flexible, custom manner.

An exemplary system is for use in printing data on a printer. A client interfaces with an applications program that has a print capability. A print server in communication with the client controls a printing of data communicated to the print server by the client. A user interface manager communicates with the print server by an asynchronous communications channel between the print server and the client. The user interface manager responds to a user interface message sent from the print server to display information to a user in a flexible custom manner.

The exemplary system includes a user display. The message sent to the client user interface manager by the server is a language neutral message that is interpreted by the user interface manager and converted to another representation for presentation to the user on the user display. When used in a printing environment, i.e. where a client print spooler and a server print server effect a printing, the language neutral message is converted at the client by the user interface manager into a message or display relating to the printer.

In one embodiment the system includes a print spooler residing on a client computer and the print spooler receives data from the applications program for transmission to the print server residing on a second, server computer. The print spooler also communicates a message to the user interface manager upon receipt of a print request from the applications program. Receipt of this message from the spooler causes the user interface manager to set up an asynchronous notify channel with the print server for passing data related to the print request from the spooler to the server. It is via this notify channel that the print server sends a language neutral message that conveys a status of a print job being supervised by the print server.

These and other objects, advantages and features of the invention are more fully described in the following exemplary embodiment of the system which is described in conjunction with the accompanying drawings.

### Brief Description of the drawings

Figure 1 is a schematic depiction of a computer system for use in implementing an exemplary embodiment of the present invention;
Figure 2 is a schematic depiction showing multiple computers networked together wherein at least one computer includes software for implementing a print spooler constructed in accordance with the invention;
Figure 3 is a schematic block diagram of components executing on a client computer for implementing an exemplary embodiment of the invention;
Figure 4 is schematic depiction of a remote procedure call mechanism of allowing a client to request print services from a server;
Figures 5A - 5D are flow diagrams of an exemplary process for implementing an asynchronous channel for client/server communications; and
Figure 6 is an interface definition for use in providing a component of a user interface in accordance with an exemplary embodiment of the invention.

### Exemplary mode for practicing the invention

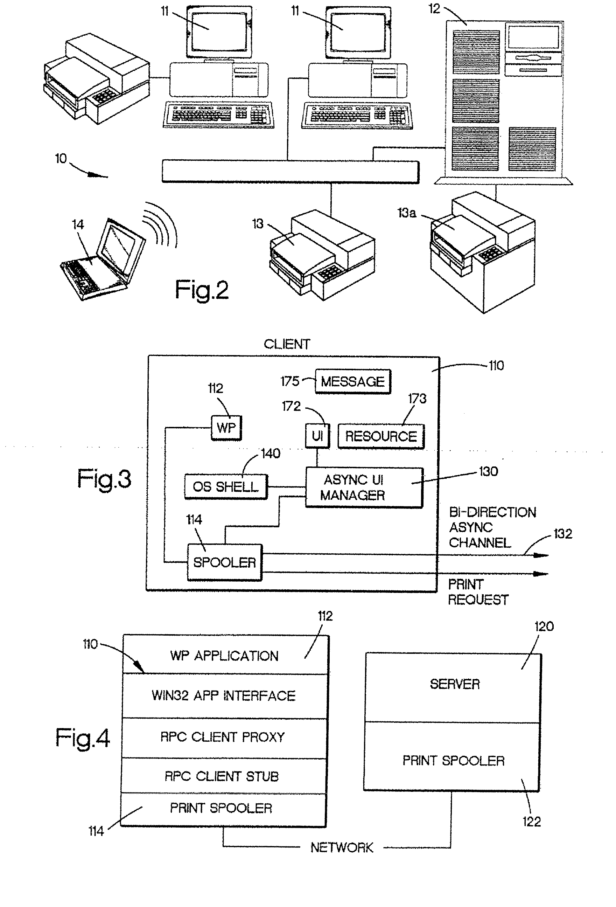

Figure 2 is a depiction of a network 10 having a plurality of workstations 11 that communicate with a server computer 12 by means of network communications. The server communicates with a number of printers 13 by means of the network for servicing print requests. The server computer 12 also includes an interface coupled to a printer 13a by means of a parallel interface. The communications over the network is both wired by means of conventional Ethernet switches and Ethernet cards installed in the workstations 11 and server computer 12 and wireless by means of a wireless router which implements known wireless communications standards. Thus, for example, a laptop computer 14 is able to communicate with the server computer 12 without physically being connected to the network hardware. The workstations (or laptop) can communicate and direct a print spooler implemented on the server computer 12 to print at the request of one of the applications programs executing on one or the workstations. A word processing application, for example, communicates its requests by means of a Win32 application program interface exposed to the application by the workstation operating system. Although Win32 is the presently preferred application interface for the Windows ® brand operating system, other means of sending requests to the server computer 12 are contemplated by the invention.

An exemplary embodiment of the invention uses a client/server model of inter-process communications. More particularly, in one exemplary embodiment, a client process on a workstation 11 communicates by means of the network 10 with one or more print servers 12 to print in a more robust manner than the prior art printing systems. Figure 4 is a schematic depiction of the interactions of server and client that implement a remote procedure call (herein RPC) based process of queuing jobs at the print spooler. In Figure 4, a client 15 is seen interacting by means of a network (such as the network of Figure 2) with a server 16. In one example, the client is software is running on a workstation and the server software is software running on the server computer 12.

Utilization of an RPC inter-process communication allows an application executing on a local machine such as one of the workstations 11 to call a process on a remote machine such as the server computer 12 in Figure 2. The calling word processing program is not concerned with the fact that the printing process invokes code execution on the server. To the local application, it appears the process is running completely on the local machine.

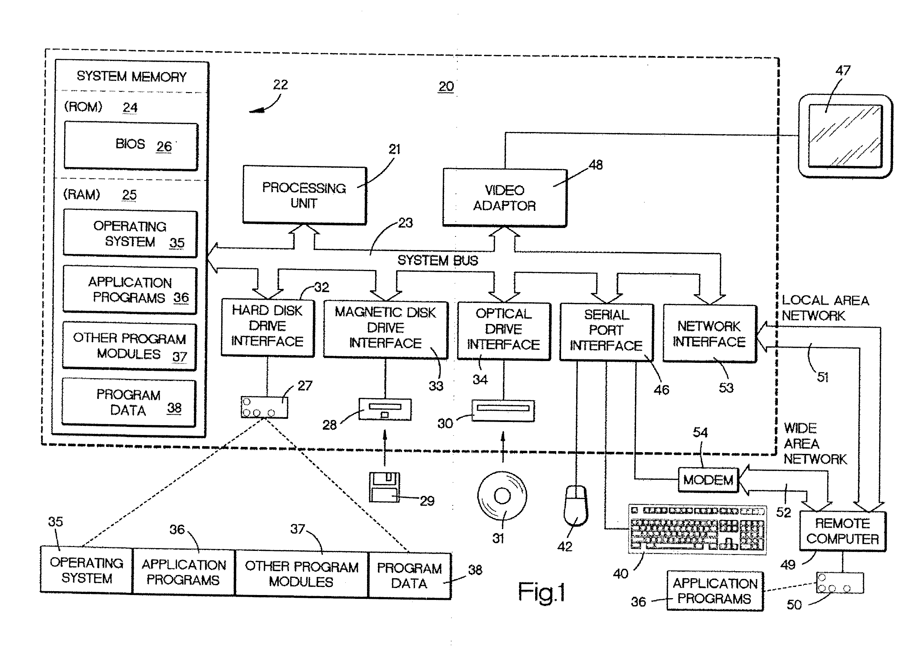

Figure 1 depicts an exemplary data processing system that could, for example, represent the structure of either a workstation 11 or a server computer 12 on the network 10. The system includes a general purpose computing device in the form of a conventional computer 20, including one or more processing units 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures.

The system memory includes read only memory (ROM) 24 and the random access memory (RAM) 25. A basic input/output system 26 (BIOS), containing the basic routines that help to transfer information between elements within the computer 20, such as during start-up, is stored in ROM 24.

The computer 20 further includes a hard disk drive 27 for reading from or writing to a hard disk, not shown; a magnetic disk drive for reading from or writing to a removable magnetic disk 29; and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer-readable media provide nonvolatile storage of computer readable instructions, data structures, program modules and other data for the computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memories (ROM), and the like, may also be used in the exemplary operating environment.

A number of program modules may be stored on the hard disk, magnetic disk 29, optical disk 31, ROM 24 or RAM 25, including an operating system 35, one or more application programs 36, other program modules 37, and program data 38. A user may enter commands and information into the computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor, personal computers (PCs) typically include other peripheral output devices (not shown), such as speakers and printers.

The computer 20 depicted in Figure 1 typically operates in a networked environment using logical connections to one or more remote computers, such as a remote computer 49. The remote computer 49 may be another PC, a server, a router, a network PC, a peer device or other common network node, and typically includes many or all of the elements described above relative to the computer 20, although only a memory storage device 50 has been illustrated in Figure 1. The logical connections depicted in Figure 1 include a local area network (LAN) 51 and a wide area network (WAN) 52. Such networking environments are commonplace in offices, enterprise-wide computer networks, intranets and the Internet.

When used in a LAN networking environment, the computer 20 is connected to the local network 51 through a network interface or adapter 53. When used in a WAN networking environment, the computer 20 typically includes a modem 54 and other means for establishing communications over the WAN 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing a communications link between the computers may be used.

In the Windows 2000 brand (and later versions) operating system environment, to write an RPC application, the operating system programmer decides which procedures will execute locally and which will execute remotely. As an application runs, it calls local procedures as well as procedures that aren't present on the local machine. To handle the latter case, the application is linked to a local static-link library or DLL that contains stub procedures, one for each remote procedure. The stub procedures have the same name and use the same interface as the remote procedures, but instead of performing the required operations, the stub takes the parameters passed to it and marshals them for transmission across the network. The process of marshaling parameters means ordering and packaging the parameters in a particular way to suit the network link, such as resolving references and picking up a copy of any data structures that a pointer refers to. This process of RPC communications is indicated in the Figure 4 depiction of an RPC process.

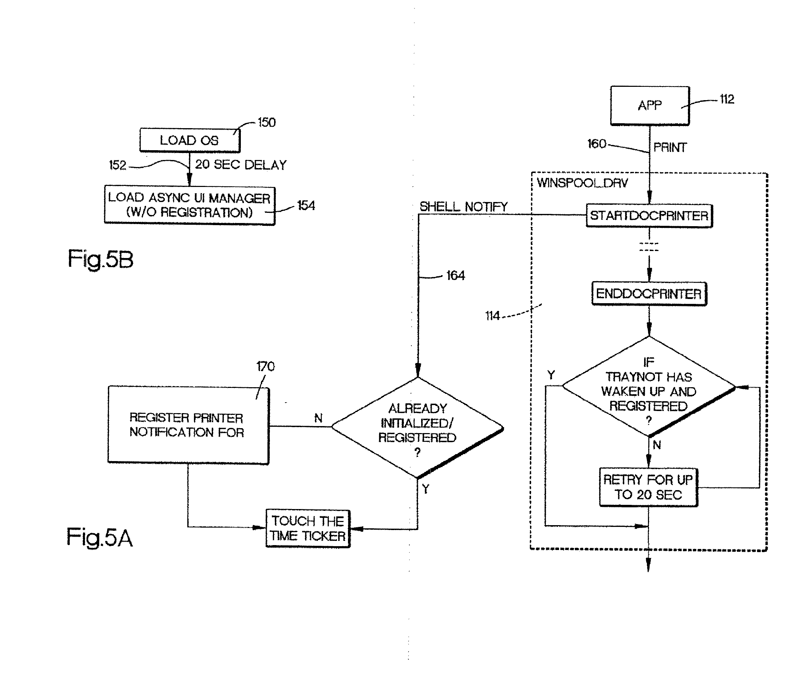

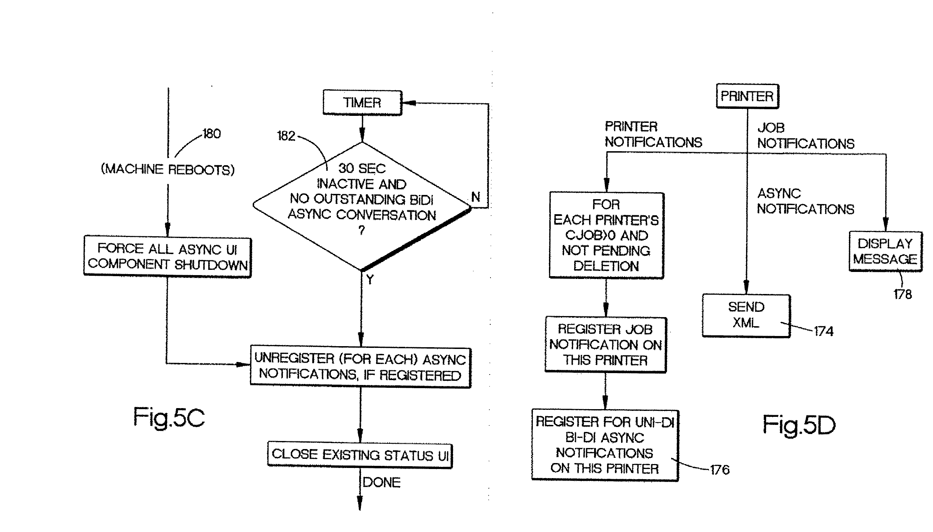

Figures 3, 5A and 5B depict apparatus and a flowchart for practicing an exemplary embodiment of the invention. More specifically these figures present details concerning an initialization and utilization of a bi-direction asynchronous communications channel that shares the network hardware (such as the network of figure 2) with print requests made by the workstations 11 to a print server 12 in communication by means of the network 10.

Figure 3 illustrates a client 110 having components for printing data on a printer (such as one or the printers 13 in Figure 2) and includes a print spooler 112 that interfaces with an applications program such as a word processing program 112 having a print capability. As is well know, a user interface for the word processing program 112 includes a menu for making print requests on available printers including printers available by means of a print request made to the print server computer 12. A server component 120 (Figure 4) executing on the print server computer 12 implements a print spooler 122. The print spooler 122 communicates with a print spooler 114 on the client that controls a printing of data communicated to said print server computer by the client 110.

The client also includes a user interface manager 130 that communicates with the print server computer 12 by means of an asynchronous communications channel 132. It is by means of the asynchronous communications channel 132 that the print server computer 12 can send language neutral messages to the client which are converted to language specific messages by the client. The user interface manager component 130 responds to a user interface message sent from the print server computer by displaying information to a user.

To place this in the context of one client/server scenario, consider a workstation 11 servicing a print request of a word processing program executing on the workstation. The user activates the print command and desires to produce two sided print output on paper at a printer 13 coupled to his or her workstation by means of the network 10. The printer chosen by the workstation user is only capable of single side printing, however, and it is the function of the server computer 12 to be aware of the limitations of the chosen printer and inform the user on how to accomplish two sided printing with the specific printer chosen by the user. More particularly, at an appropriate time in the print job process the paper must be taken from a printer output tray, turned over and placed back into the printer input tray for printing of alternate pages on a second side of the paper. To add to the difficulty of accomplishing this function, the language of messages conveyed by a user interface of the server may be different than the language of the client and an appropriate mechanism for displaying the message from the server to the client must exist.

Turning to the flow chart of Figure 5A, and 5B, one sees that the process of initiating client/server communications to implement the exemplary embodiment starts when the workstation 11 boots and an operating system shell 140 is initiated or loaded 150. After a delay 152, the operating system shell loads 154 the user interface manager 130 which then awaits notification from the print spooler (which is also loaded upon startup of the operating system shell) that a print request has been made by an applications program such as a word processing program 112.

After the operating system is started and an applications program such as a word processing program is running, the word processing program initiates a print request 160 which is communicated to the print spooler 114 residing on a client computer. The print spooler receives data from the applications program for transmission to the print server. In one embodiment this data is transmitted by means of an asynchronous remote procedure call (RPC) between the client and the server. The remote procedure runtime component of the print spooler includes a generic transport provider interface to mate or interface with a transport protocol. The provider interface acts as a thin layer between the RPC facility of the print spooler and the transport and serves to map RPC operations onto the functions provided by the transport. The print spooler 114 also communicates 164 a message to the user interface manager 130 upon receipt of the print request 160 from the applications program

In response to this message from the print spooler, the user interface manager 130 sets up 170 an asynchronous notify channel 132 to the print server for inter-process communications independent of the print request from the client print spooler to the server print spooler. A presently preferred bi-directional asynchronous communications channel uses the tcp/ip transport protocol and is implemented by asynchronous remote procedure calls to a server which may for example be the print server 12. Additional details concerning asynchronous RPC communications are found in chapter 13 of the text entitled "Inside Microsoft Windows 2000" copyright 2000 to Solomon et al published by Microsoft Press. This channel is separate and distinct from the RPC communications between the two print spoolers regarding progress of the applications programs print request. As one example, this separate and distinct channel is used to facilitate completion of a print request. To be more specific, this separate and distinct communications channel can be used to instruct a user at the workstation that the paper in the output tray of the printer should be withdrawn and inserted into the input tray after it has been turned over to accomplish two sided printing. Thus, in the exemplary embodiment this bi-directional asynchronous channel is used to notify the client interface component 130 concerning a status of the print spooler print request. A typical response of the client interface component 130 is to display a message or messages on a monitor 47 at the workstation 11.

Once the asynchronous bi-directional communications channel is established the user interface component listens for requests directed to it from the print spooler 122 executing on the print server computer 12. These messages are in the form of a language neutral message that is composed by a print server driver which communicates by means of the print spooler. In the exemplary embodiment they are formulated as XML documents an example of which is depicted below.

Figure 5D is a schematic flowchart of functions performed by the print server computer print spooler 122. The print spooler 122 receives status messages from the printer 13, sends asynchronous notification messages 174 back to the client, associates print requests with a particular printer by registering 176 the printer for either unidirectional or bidirectional communications with the client and communicates 178 messages not intended for the user interface component 130 back to the client.

The print spooler 122 is capable of closing an existing asynchronous channel due to inactivity on that existing channel. This is done in response to a server computer reboot 180, or alternatively upon a determination 182 that there has been no communications with a specified time (in one embodiment 30 seconds) and that there is not a currently pending asynchronous conversation. Stated another way, the server checks every 30 seconds to see if there is a user requested job and if there are no pending jobs from the client the corresponding communications channel is shut down.

The user interface component 130 is flexible in responding to the status message from the print spooler computer. The message contains a statement that instructs the user interface component to load a default executable UI component (a DLL) or a custom executable component (also a DLL) used in interpreting the message. Each of these components is referred to by the reference character 172 in figure 3. The message is language neutral at the print server but contains the information needed by the user interface manager 130 to create a specific language user readable message 175 on the monitor 47 at the workstation 11. The executable component 172 accesses a resource file 173 which contains graphical interface components for display as the message 175 on the workstation monitor 47. The resource file 173 contains text strings (such as ascii text stating "please retrieve paper from output and re-insert into input tray for duplex printing"), dialog boxes, balloon pop-ups or any other resources familiar to those skilled in the art of user interface design. In the event the executable component accessed by the user interface component 130 is a default component, then the default component will access a default resource file. One of the strengths of the exemplary embodiment is the ability to create other than default components and resource files.

The resource file, as well as the XML message, can contain more than just messge strings or message string Ids. The XML can also contain an ID that is interpreted by the resource file to instruct it to load any user interface that the printer vendor can design, from simple messages to quite complex dialogs, wizards, pictures, and so on. The XML can also contain a sizable amount of binary data that, again, can consist of literally anything that the printer vendor wishes.

### Async Channel interfaces

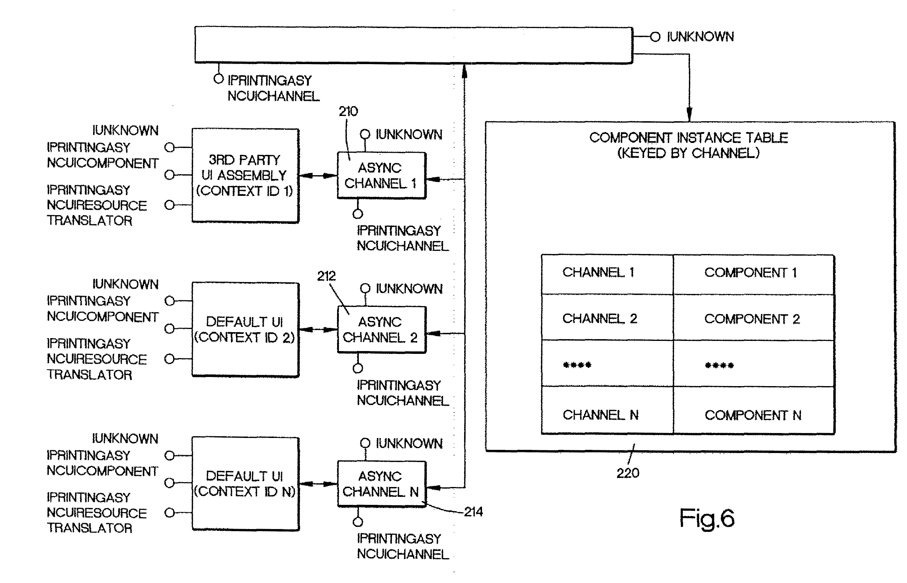

Figure 6 depicts a schema for an interface built on the .NET ® framework of the windows brand operating system. Figure 6 illustrates objects which implement functions that are exposed to the user interface manager 130 for asynchronous notifications from the print server 12.

The user interface manager 130 is created by an instantiation of a public class 'PrintingAsyncUIManager' the first time that a user starts to print using the application 112. A notification is sent to the operating system shell and the operating system checks whether there is an instance of PrintingAsyncUIManager class instantiated. If not, it is created and kept active until the current operating system session shuts down. When a job starts, an IAsyncChannelCallback interface is registered and starts to listen to the async channel. This listening is initated by executing a function RegisterAsyncNotification which takes as a parameter a string that designates the channel name. This name is derived from a combination of the server name and the printer name of the printer in communications with the server. (This registration assumes this printer has not already been registered.)The user interface manager 130 remains active and is unloaded when a user logs off the computer

Both unidirectional and bidirectional async channels are marked for deletion when the number of user jobs goes to 0 on a particular printer. A 30 second timer is used to delete an async channel. (The average time from marking for deletion and actual deletion will be about 45 seconds. During deletion of an asynch channel the exemplary embodiment calls an UnRegisterAsyncNotification function.

A PrintingAsyncUIChannel object is instantiated when a message appears on the channel. This function provides a wrapper for an IAsyncNotifyChannel interface provided by the print spooler 114. The print spooler 114 gathers binary data directly, but the asynchronous UI manager 130 deals with XML data contained in a document such as the example XML document below. Translation is needed from the raw data to XML and the PrintingAsyncUIChannel objects does this interpretation. This object also responds to the print server with XML response messages in the case of a bi-direction channel and has a close function that informs the server 12 that the channel is closing.

The UI manager loads components and resources and maintains a component list of loaded components 172 in a channel-to-UI component mapping table 220. When a UI component 172 shuts down, then this PrintingAsyncUIChannel object allows the UI manager to clean up an entry in the channel-to-UI-component mapping table 220. When a notification comes in via the IAsyncNotifyChannel interface, the UI manager 130 determines if there exists some PrintingAsyncUIChannel object stored in the table 220 that wraps the IAsyncNotifyChannel.

The XML message received by means of the channel 132 has the information needed by the UI manager 130 to determine which component 172 must be loaded for interpreting a message. Interface 1 below is the published interface definition that the printer manufacturer must create in order to allow the message to be displayed by a non-default component.

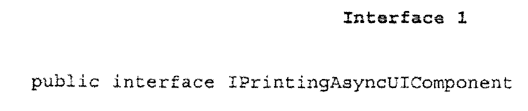

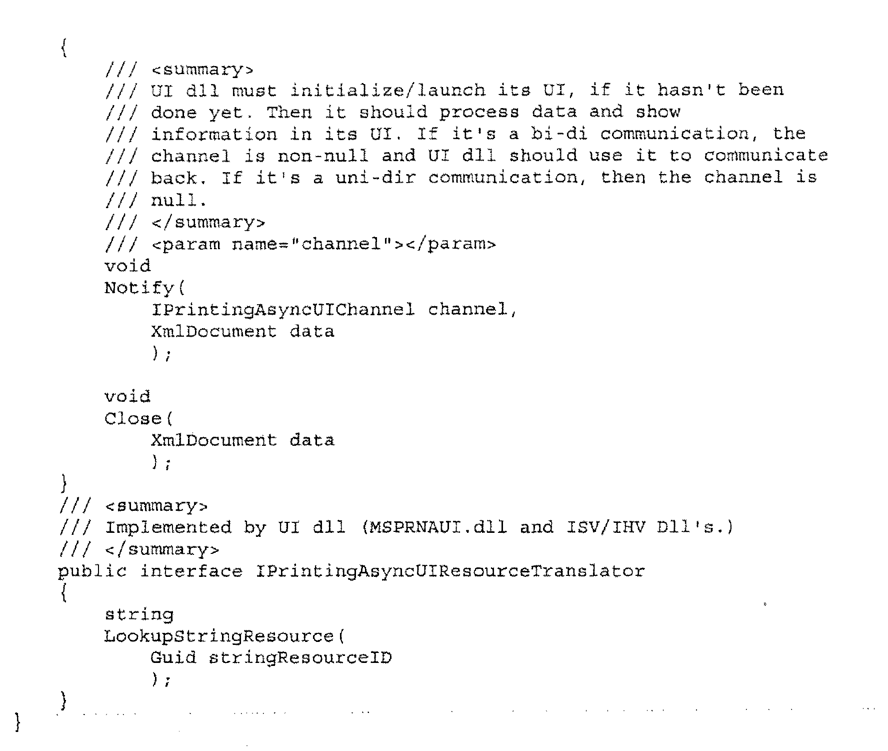

Note the resource translator function is a function that returns a string based on a string resource identifier sent from the server thereby allowing a language neutral message from the server to be converted and displayed by a component specific to a particular application or geographic region.

An example of an XML message received by the manager 130 that causes a custom DLL to be loaded that interprets the message and displays an appropriate message to a user is found in the following example.

### Example

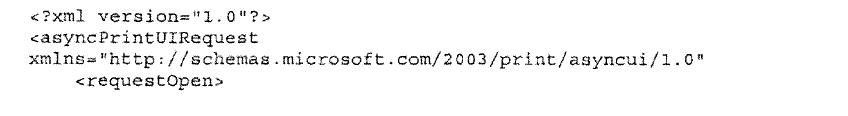

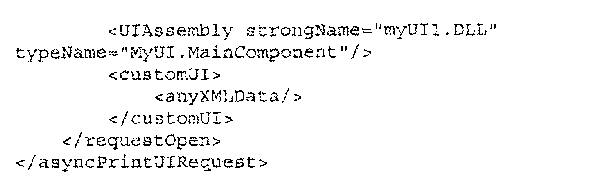

In the above example, the DLL and resources accessed by the DLL are custom and are accessed by reference to the MyUIl DLL designator and the MyUI.MainComponent resource identifier. Within the resource the custom UI reference is to a custom display element. If no custom DLL or resource identifier are referenced, the resource manager uses a default DLL and resource file.

It is understood that although the invention has been described with a degree of particularity, it is the intent that the invention include all modifications and alterations in the disclosed design falling within the spirit or scope of the pending claims.

## Claims

1. A system for use in client/server computing comprising:
a) a client that interfaces with an applications program;
b) a server in communication with the client that responds to a request from the applications program communicated to the server by the client for services available through said server; and
c) a user interface manager that communicates with the server by means of an asynchronous communications channel between the server and the client and further wherein the user interface component responds to a user interface message sent from the server to display information to a user.

2. The system of claim 1 wherein the server transmits a language neutral message across the asynchronous communications channel with information for displaying to the user and wherein the user interface manager includes an interpreter for the message.

3. The system of claim 2 wherein the user interface manager includes a custom message interpreter for converting the language neutral message into a language specific message on a display

4. The system of claim 3 additionally comprising a resource file and wherein the user interface manager custom message interpreter accesses resources in said resource file during display of said language specific message.

5. The system of claim 1 wherein the applications program includes a print capability and wherein the server is executing on a print server computer for servicing print requests from one or more client computers.

6. A system for use with a printer comprising:
a) a client that interfaces with an applications program having a print capability;
b) a print server in communication with the client that controls a printing of data communicated to said print server by the client; and
c) a user interface manager that communicates with the print server by means of an asynchronous communications channel with the print server and further wherein the user interface manager responds to a user interface message sent from the print server to display information to a user.

7. The system of claim 6 further comprising a user display and wherein the message sent to the client user interface manager is a language neutral message that is interpreted by the user interface manager and converted to another representation for the user display.

8. The system of claim 7 wherein the client user interface manager converts a globally unique identifier from the server to a user understandable message on said display.

9. The system of claim 6 comprising a print spooler residing on a client computer and wherein print spooler receives data from the applications program for transmission to the print server and also wherein the print spooler communicates a message to the user interface manager upon receipt of a print request from the applications program.

10. The system of claim 9 herein the user interface manager sets up an asynchronous notify channel to the print server for passing data related to the print request from the client print spooler to the server.

11. The system of claim 10 wherein the print server sends a language neutral message through the asynchronous notify channel based on status of a print job being serviced by the print server.

12. The system of claim 11 wherein the print server transmits messages into the user interface manager in response to a set up message from the user interface manager component.

13. The system of claim 6 wherein the user interface manager interprets the message and loads an executable component that responds to receipt of said message based on the contents of said message.

14. The system of claim 13 wherein the executable component accesses resources used by the executable component to display a message on a display monitor.

15. A method of printing data originating from one or more clients on a printer comprising:
a) providing a print spooler interface for an application to communicate with a client which in turn communicates with a print server; said print spooler interface enabling the applications to call a service routine on the print server by means of a procedure call initiated by the application; and
b) responding to language neutral messages from the print server relating to a status of one or more printers communicating with the print server by interpreting the message and presenting a display to said message understandable by a user relating to the status of the said one or more printers.

16. The method of claim 15 wherein the client user interface component converts a globally unique identifier to a user understandable message.

17. The method of claim 15 wherein the print spooler residing on a client computer and wherein the print spooler receives data from the applications program for transmission to the server and also wherein the print spooler communicates a message to the user interface manager upon receipt of a print request from the applications program.

18. The method of claim 15 wherein the user interface component sets up an asynchronous notify channel to the print server related to the print request from the spooler to the server.

19. The method of claim 15 wherein the print server sends a language neutral message through the asynchronous notify channel based on status of a print job being controlled by the print server.

20. The method of claim 19 wherein the user interface manager accesses an executable component upon receipt of the language neutral message from the print server and wherein the executable component accesses resources used by the executable component to display a message.

21. A method of displaying one or more messages at a client computer based on a server status comprising:
a) providing an interface for an application to communicate with a client computer which in turn communicates with a server; said interface enabling the application to call a service routine on the server by means of an asynchronous remote procedure call initiated by the application; and
b) responding to language neutral messages from the server relating to a status of said server by interpreting the language neutral message and presenting a display in response to receipt of said language neutral message understandable by a user relating to the status of the said server.

22. The method of claim 21 wherein a client user interface manager executing on said client computer converts a globally unique identifier to a user understandable message.

23. The method of claim 21 wherein the client comprises a print spooler residing on the client computer and wherein the print spooler receives data from the application for transmission to the server and also wherein the print spooler communicates a message to an interface manager upon receipt of a print request from the applications program that causes the interface manager to monitor status information conveyed to the client computer by said server.

24. The method of claim 23 wherein the user interface component sets up an asynchronous notify channel to the print server related to the print request from the print spooler to the server.

25. A computer readable medium for use in client/server computing comprising instructions for:
a) providing an interface for an application to communicate with a client which in turn communicates with a server; said interface enabling the application to call a service routine on the server by means of an asynchronous remote procedure call initiated by the application; and
b) responding to language neutral messages from the server relating to a status of said server by interpreting the language neutral message and presenting a display in response to receipt of said language neutral message understandable by a user relating to the status of the said server.

26. The computer readable medium of claim 25 wherein a client user interface manager executing of said client establishes a bi-directional communications channel with said server.

27. The computer readable medium of claim 25 wherein the server sends a globally unique identifier based on a status of said server and wherein the client converts said globally unique identifier to a user understandable message.

28. The computer readable medium of claim 25 wherein the client comprises a print spooler residing on a client computer and wherein the print spooler receives data from the application for transmission to the server and also wherein the print spooler communicates a message to the user interface manager upon receipt of a print request from the applications program to monitor status information conveyed by said server relating to a status of a printer.

29. The computer readable medium of claim 28 wherein the user interface component sets up an asynchronous notify channel to the print server independent of the print request from the print spooler to the server.

30. The computer readable medium of claim 25 wherein the user interface manager accesses an executable component upon receipt of the language neutral message from the print server and wherein the executable component accesses resources used by the executable component to display a message.
